# EUROPEAN PATENT APPLICATION

(11) **EP 1 705 378 A2**
(43) Date of publication of application: **27.09.2006**
(21) Application number: 06002495.7
(22) Date of filing: 07.02.2006
(51) Int. Cl.: F04C 15/00, F04C 14/26, F04C 2/10

(54) **Electric pump with pressure control**

(30) Priority: 24.02.2005 JP 2005049553
(71) Applicant: AISIN SEIKI KABUSHIKI KAISHA, Kariya-shi, Aichi-ken 448-8650 (JP)
(72) Inventor: Kurita, Hirotaka c/o Intellect. Pty. Dept., Kariya-shi, Aichi-ken, 448-8650 (JP); Miyachi, Eiji c/o Intellectual Property Department, Karlya-shi, Aichi-ken, 448-8650 (JP); Nakayoshi, Hideki c/o Intellect. Pty. Dept., Kariya-shi, Aichi-ken, 448-8650 (JP)
(74) Representative: Kramer - Barske - Schmidtchen

(57) **Abstract**

An electric pump includes a pump body (1), an intake port (2) formed in the pump body, a discharge port (3) formed in the pump body for discharging fluid pumped from the intake port, a rotor (4) housed in the pump body, and a brushless sensorless motor (5) which rotates the rotor, characterized by a mechanism (D, D') for preventing losing synchronism of the brushless sensorless motor by controlling hydraulic pressure in the discharge port not to exceed a predetermined pressure.

## Description

### FIELD OF THE INVENTION

The present invention relates to an electric pump and a fluid supply apparatus which includes the electric pump. More particularly, the present invention pertains to an electric pump and a fluid supply apparatus which is constructed using the electric pump which drives a rotor housed in a pump body by a brushless sensorless motor in order to discharge fluid, which is sucked through an intake port provided at the pump body, through a discharge port.

### BACKGROUND

Electric pumps for conveying fluid are applied, for example, to a continuously variable-speed transmission (CVT) for a vehicle and to a power steering device in order to supply working oil to a hydraulic pressure drive portion thereof. For example, a known CVT includes a first pump, which is a mechanical pump, and a second pump, which is an electric pump, for a hydraulic pressure drive. In this case, when a degree of an engine rotation speed is equal to or greater than a predetermined speed, working oil is supplied to an automatic transmission only by the first pump (i.e., mechanical pump). On the other hand, when a degree of engine rotation speed is less than the predetermined speed, working oil is supplied to the automatic transmission by both of the first pump (i.e., mechanical pump) and the second pump (i.e., electric pump) in order to compensate for a shortage of oil discharge amount by the first pump. When the engine is stopped, working oil is supplied to the CVT only by the second pump.

Electric pumps applied to a CVT for a vehicle is used in a high-temperature environment because of being assembled in the vicinity of the engine, and is used in a severe humidity environment because of water drops by rains, or the like. In order to resolve drawbacks such as abrasion of a motor brush by the heat generated in this case, and an absence of the waterproof, for example, a brushless motor may be applied. However, brushless motors require a sensor for detecting an angular position of a rotor, and thus durability of the sensor is an issue. In those circumstances, a brushless sensorless motor is applied as an auxiliary hydraulic pressure supply device for the CVT (i.e., JP2002-27776A).

A compact synchronous motor with a permanent magnet is applied to the brushless sensorless motor. With the brushless sensorless motor of this kind, a driver includes an inverter, and a direct current power from a battery is inverted into alternating current power to be inputted into the motor. In case a voltage of the given alternating current power is constant, an electric current phase of the motor advances when a frequency is increased. Under a state where the given voltage and the frequency are constant, when, for example, a load is increased by an increase of oil supply amount by the pump, an electric current phase of the motor advances. With the brushless sensorless motor, using the foregoing relationships, the motor is controlled using frequency.

Generally, a brushless sensorless motor uses counter electromotive force of the motor as a positional signal of a rotor in order to detect an angular position of the rotor. In other words, drive electric power of a low frequency is applied to the motor from the driver. Accordingly, rotor is attracted, and the motor starts to rotate. Upon the rotation of the motor, counter electromotive force is generated at the rotor synchronously to a rotation speed. An angular position of the rotor is detected from a waveform of the counter electromotive force. A rotation frequency of the rotor is detected from the waveform of the counter electromotive force, and an electric current is controlled so as to achieve a predetermined initial rotation speed. Such motors can be applied to a brushless sensorless motor.

In a known device, a further improved brushless sensorless motor is applied. In the foregoing general method for detecting an angular position, the drive electric power to be given to the rotor has to be a square wave. Thus, when the drive electric power is a sine wave, the counter electromotive force of the rotor cannot be detected. On the other hand, in terms of characteristics such as efficiency, an electric current control using a sine wave is more desirable than an electric voltage control using a square wave for a motor. Accordingly, a motor, which does not detect position thereof, applies electric power with sine wave from a driver thereto, detects a phase difference between an electric voltage and an electric current at a timing and controls frequency so that the phase difference becomes zero, and controls the electric current so that the frequency becomes a predetermined level, can be applied.

Notwithstanding, with the known brushless sensorless motor, although a control of a rotation speed is stable when a degree of motor load is small, a rotation of motor may lose synchronism and a rotation may even stop when the load applied to the motor is increased.

For example, occasionally, it is desirable to continuously supply working oil to a CVT by an auxiliary electric pump in order, for example, to return the CVT to a predetermined state when an engine stops. When the engine stops, pressure to supply working oil to the CVT decreases, and working oil in passages starts to return to an oil pan side. Accordingly, it is required to promptly supply working oil to the CVT by the electric pump after the engine stops. In this case, when working oil is supplied to the CVT by the electric pump at a too early timing after the engine stops, because large volume of working oil remains in the passages for supplying working oil and pressure at a discharge port of the electric pump may maintain high pressure. In those circumstances, a rotation speed of a rotor is not increased receiving resistance from the discharge port even if trying to start operation of the electric pump, synchronism may be lost, and the rotor may not be able to start rotating.

Further, when a pressure at a discharge side port of the electric pump increases in a state where a rotation of the motor is stable, a rotation speed of a rotor is decreased. However, with the construction of a brushless sensorless motor at which an electric current control is performed, an electric current value is controlled to further increase in order to increase a rotation speed. As a result, a deviation between a rotation speed of the rotor and a controlled electric current value is increased, and thus a degree of losing synchronism of the motor is increased. In accordance with this, the generation of heat of the motor is increased, which is a cause of failure, or the like.

In order to resolve the foregoing drawbacks, for example, a pressure sensor may be provided at the discharge port of the electric pump, and the electric pump may be activated after confirming a decline of a working oil pressure. However, providing an additional sensor complicates a construction of the CVT, increases manufacturing hours of the electric pump, and increases manufacturing cost.

A need thus exists for an electric pump, which securely prevents losing synchronism, with a simple construction, and a fluid supply apparatus that includes the electric pump.

### SUMMARY OF THE INVENTION

In light of the foregoing, the present invention provides an electric pump, which includes a pump body, an intake port formed in the pump body, a discharge port formed in the pump body for discharging fluid pumped from the intake port, a rotor housed in the pump body, a brushless sensorless motor which rotates the rotor, and a mechanism for preventing losing synchronism of the brushless sensorless motor by controlling hydraulic pressure in the discharge port not to exceed a predetermined pressure.

According to the present invention, using the brushless sensorless motor, the electric pump which is durable in the high temperature environment and high humidity environment can be obtained. Because the rotor and an induction circuit are not in contact each other with the brushless sensorless motor, the brushless sensorless motor is likely to lose synchronism in accordance with an increase of fluid pressure at the discharge port. However, with the construction in which hydraulic pressure in the discharge port is controlled not to exceed a predetermined pressure, hydraulic pressure in the discharge port can be set within a predetermined initial range. In a consequence, the electric pump, which effectively prevents losing synchronism of the brushless sensorless motor and excels in stable supply of the oil, can be obtained.

According to another aspect of the present invention, a fluid supply apparatus includes a first pump which pumps fluid from a fluid reservoir, a first supply passage for conveying pumped fluid to a destination of the fluid to be supplied, a relief valve provided on the first supply passage, the relief valve preventing an increase of fluid pressure in the first supply passage to be equal to or greater than a predetermined pressure, an intake port which pumps fluid from either the fluid reservoir or a separately provided fluid reservoir, an electric driven second pump having a discharge port for discharging pumped fluid, a second supply passage merged with the first supply passage between the first pump and the relief valve, a rotor provided on the second pump and electrically driven by a brushless sensorless motor, and a mechanism for preventing losing synchronism of the brushless sensorless motor by controlling hydraulic pressure in the discharge port not to exceed a predetermined pressure value lower than operational pressure of the relief valve.

According to the present invention, by the construction which can supply the fluid by means of the second pump in addition to the fluid supply by the first pump, the fluid supply apparatus which includes an auxiliary function to supply fluid can be obtained, which is usable in the severe environment. In this case, even when there is a large difference between the fluid supply pressure by the first pump, which is a main fluid supply apparatus, and the fluid supply pressure by the second pump, which is an auxiliary fluid supply apparatus, by using the second pump which solves the problem of the brushless sensorless motor, such as being likely to lose synchronism, the rotor can securely start to rotate when the second pump is in operation. Further, because the rotor which once start to rotate securely maintains the rotation, the fluid supply apparatus which excels in operational stability can be obtained.

### BRIEF DESCRIPTION OF THE DRAWINGS

The foregoing and additional features and characteristics of the present invention will become more apparent from the following detailed description considered with reference to the accompanying drawings, wherein:

Fig. 1A is a cross-sectional view of an electric pump according to an embodiment of the present invention.

Fig. 1B is a partial cross-sectional view of the electric pump where a mechanism D for preventing a losing synchronism is in operation according to the embodiment of the preset invention.

Fig. 2 is a schematic view of a fluid supply apparatus applied with the electric pump according to the embodiment of the present invention.

Fig. 3 is a graph explaining operational characteristics of the electric pump according to the embodiment of the present invention.

Fig. 4 is a partial cross-sectional view of a variation of an electric pump according to the embodiment of the present invention.

### DETAILED DESCRIPTION

An embodiment of the present invention will be explained with reference to illustrations of drawing figures as follows. The present invention is applied to a CVT (Continuously variable-speed transmission) for a vehicle in this embodiment.

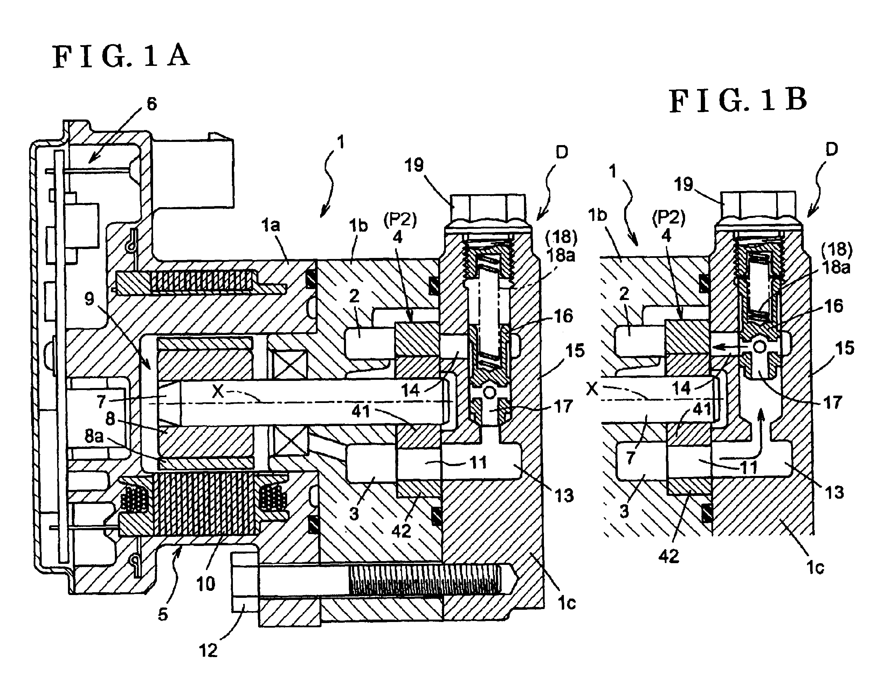

As shown in Fig. 1, a pump body 1 of an electric pump includes a first housing 1a, a second housing 1b, and a third housing 1c. The first housing 1a is provided with a motor 5 for rotating a rotor 4, and a control means 6 for controlling the motor 5. A rotor 8 is provided on a first end of a rotational shaft 7 which is a part of the rotor 4. A permanent magnet 8a is provided on an external periphery of the rotor 8. The rotor 8 is positioned in a recess portion 9 of the first housing 1a. An induction coil 10 is positioned enclosing the rotor 8. A known motor is applied as the motor 5, which rotates the rotor 8 with sensor-less and brushless construction.

The second housing 1b is arranged adjacent to the first housing 1a in an extending direction of the rotational shaft 7, and connected to the first housing 1a. A pump mechanism which includes an inner rotor 41 and an outer rotor 42 is provided at the second housing 1b. An outer gear formed on the inner rotor 41 is fitted to a second end of the rotation shaft 7. An outer rotor 42 which includes an inner gear is eccentrically engaged with the inner rotor 41. Accordingly, a space 11 which is formed between the outer gear and the inner gear, because of the eccentric engagement of the inner gear 41 and the outer gear 42, serves as a pump chamber. An intake port 2 and a discharge port 3 which are configured to be in communication with the space 11 is formed on the second housing 1b.

The third housing 1c is arranged adjacent to the second housing 1b in the extending direction of the rotational shaft 7, and connected to the second housing 1b. The first housing 1a, the second housing 1b, and the third housing 1c are connected by means of a connecting bolt 12. A mechanism D for preventing losing synchronism, which appropriately maintains a rotation of the rotor 4 by adjusting a discharge pressure of the fluid from the discharge port 3, is provided on the third housing 1c. Because the rotor 8 and the induction coil 10 are separated from each other (no-contact) in a brushless sensorless motor applied to the embodiment of the present invention, the rotor 8 and the induction coil 10 may lose synchronism when the fluid resistance which the rotor 4 receives is increased.

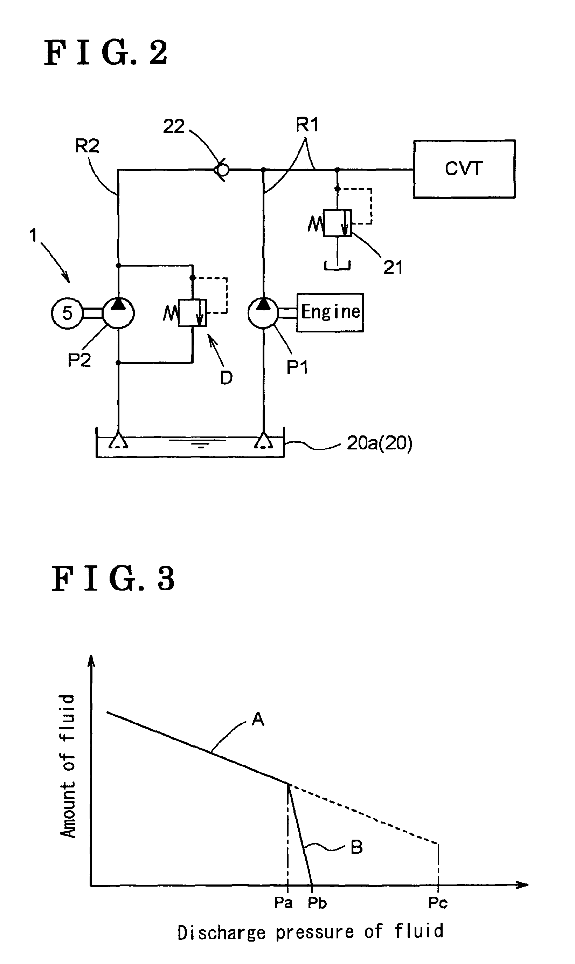

A relationship between discharge pressure and amount of fluid when operating a brushless sensorless motor is as shown in Fig. 3. The discharge pressure of the fluid is shown at a horizontal axis, and the amount of fluid is shown at a vertical axis. As shown with line A of Fig. 3, the amount of the fluid linearly declines in accordance with an increase of the pressure. Because an increase of the fluid pressure at the discharge port 3 corresponds to an increase of the resistance when the fluid is discharged, the discharged fluid amount is declined as a consequence. The motor 5 performs an electric current control, and when a rotation speed of the rotor 8 declines in accordance with an increase of the discharge pressure, the control means 6 increases an electric current value that is to be applied to the induction coil 10 in order to increase rotation speed of the rotor 8. As a result, rotation of the rotor 8 starts to show a tendency of a losing synchronism. A rotation of the rotor 8 and the rotor 4 is not immediately stopped, however, rotation speed of the rotor 8 and the rotor 4 is maintained to some degree, and working point of the discharge pressure and the amount of fluid moves to the right along line A. However, when the degree of pressure reaches pressure Pc, degree of losing synchronism becomes excessive, a rotation of the rotor 8 and the rotor 4 cannot be maintained, and the rotor 8 and the rotor 4 stop the rotation.

In order to resolve the foregoing drawbacks, the electric pump according to the embodiment of the present invention includes the mechanism D for preventing losing synchronism which restrains an increase of pressure at the discharge port 3. More particularly, as shown in Fig. 1, a cylinder 15 including an opening portion 13 at discharge side which is in communication with the discharge port 3 and an opening portion 14 at intake side which is in communication with the intake port 2 is formed on the third housing 1c. An extending direction of the cylinder 15 is approximately perpendicular to an extending direction of the rotational shaft 7. According to the foregoing arrangements, the discharge port 3 and the intake port 2 which are provided at the second housing 1b can be connected through the cylinder 15 unforcedly. Further, because the third housing 1c does not excessively project in the extending direction of the rotational shaft 7, the electric motor can be constructed in compact.

The opening portion 13 at the discharge side is formed at side wall of the cylinder 15 to be in communication with the intake port 2 in a longitudinal direction of the cylinder 15. The opening portion 14 at the intake side is formed at side wall of the cylinder 15 to be in communication with the discharge port 3. A piston 16 arranged inside the cylinder 15 is formed with a communication passage 17 which is formed in the piston 16. A first end of the communication passage 17 opens to a top portion of the piston 16 which faces the opening portion 13 at the discharge side. A second end of the communication passage 17 opens to an external periphery surface of the piston 16 through plural holes (e.g., four holes) with even intervals along a periphery direction. By providing the plural holes (e.g., four holes) even when the piston 16 rotates during the operation, one of the holes can be in communication with the opening portion 14 at the intake side, and thus can be in communication with the intake port 2.

The piston 16 is constantly biased towards the opening portion 13 at the discharge side by means of a coil spring 18a. At a normal state where a fluid pressure of the discharge port 3 is not significantly increased, the piston 16 contacts the opening portion 13 at the discharge side (shown in Fig. 1A). When the fluid pressure at the discharge port 3 increases, the piston 16 is pushed to an opposite side of the opening portion 13 at the discharge side against biasing force of the coil spring 18a serving as a biasing member 18. As a result, the communication of the opening portion 14 at the intake side with the intake port 2 is established through the communication passage 17 (i.e., shown in Fig. 1b). The fluid inside of the discharge port 3 returns to the intake port 2 which is applied with the lower pressure than in the discharge port 3, and a degree of the pressure at the discharge port 3 declines. Because of the decline of the fluid pressure at the discharge port 3, resistance, which disturbs a rotation of the rotor 4, is decreased, and a rotation of the rotor 4 is appropriately maintained.

When the pressure in the discharge port 3 increases during the operation of the electric pump, as shown in Fig. 3, the working point of the pressure and the amount of fluid moves to the right on line A. However, by providing the mechanism D for preventing losing synchronism, the piston 16 is pushed to establish the communication between the intake port 2 and the discharge port 3 at timing when the pressure is increased to a predetermined level. As illustrated in Fig. 3, the working point declines along line B when the pressure reaches a predetermined pressure Pa. That is, the discharge pressure when the communication between the discharge port 3 and the intake port 2 is established is the predetermined pressure Pa. In circumstances where the discharge pressure is further increased after exceeding the predetermined pressure Pa, the piston 16 is further pushed. Accordingly, the discharge pressure of the fluid is gradually increased, and the amount of the fluid becomes zero when the discharge pressure reaches a predetermined pressure Pb. In this case, entire fluid discharged from the rotor 4 returns to the intake port 2, and the electric pump starts to idle. The predetermined pressure Pb is determined within a range of discharge pressure by which the rotor 4 does not lose synchronism. More particularly, the predetermined pressure Pb is determined on the basis of dimensions of cross-section of the piston 16 and biasing force of the coil spring 18a, or the like. For example, by changing the coil spring 18a to another having different modulus of elasticity, the predetermined pressure Pb can be varied. As shown in Fig. 1, the coil spring 18a can be easily changed only by removing a plug bolt.

With the mechanism D for preventing losing synchronism constructed in the foregoing manner, the electric pump can cope with a fluctuation of pressure at the discharge port 3 by using biasing force of the biasing member 18 without additionally providing a pressure sensor. In other words, because generation of a load exceeding operational limit of an electric pump can be prevented, losing synchronism of the brushless sensorless motor can be securely prevented. Further, because fluid pressure which operates the piston 16 can be set at an appropriate value by adjusting biasing force of the biasing member 18, a range of application of the electric pump can be widen.

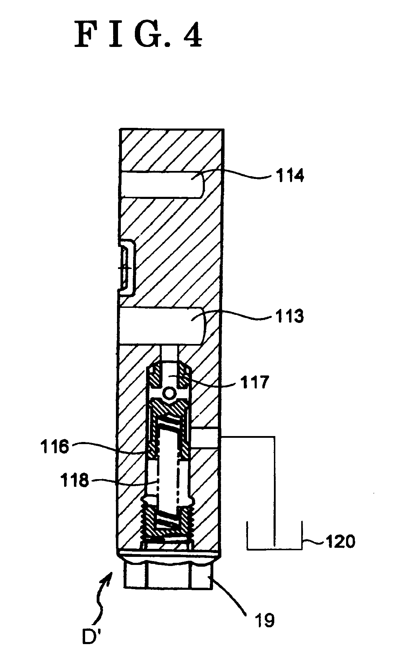

The mechanism D for preventing losing synchronism is not limited to a construction where the fluid at the discharge port 3 returns to the intake port 2. For example, as shown in Fig. 4, according to a variation of the embodiment of the present invention, a mechanism D' for preventing losing synchronism including a piston 116, a communication passage 117, and a biasing member 118 is configured to establish a communication between an oil pan 120 and an opening portion 113 at the discharge side through the communication passage 117. Other construction of this variation is the same with the embodiment of the present invention. With this construction, the fluid at the discharge port 3 is discharged outside the pump body 1, and is returned to the separately provided reservoir.

Further, the mechanism D for preventing losing synchronism is not limited to a spool type in which the piston 16 and the cylinder 15 are applied, and other constructions can be applied. For example, a mechanism which is provided with other relief functions such as a valve body which swings, and a ball type check valve can be applied. In short, any mechanisms can be applied as long as the mechanism returns fluid in the discharge port 3 to the intake port 2 in accordance with an increase of the fluid pressure in the discharge port 3, or the mechanism discharges fluid by establishing the communication between the discharge port 3 and the outside of the pump body 1.

As shown in Fig. 2, according to the embodiment of the present invention, the electric pump is applied to an fluid supply apparatus for a CVT. The fluid supply apparatus includes a first pump P1 which pumps oil from an oil reservoir 20a serving as a fluid reservoir 20, and a first supply passage R1 which conveys pumped oil to the CVT which is a destination of the oil. The first pump P1 is a mechanical pump which utilizes rotational force of a crankshaft of an engine, or the like. A relief valve 21, which prevents that a degree of the oil pressure is increased to be equal to or greater than a predetermined pressure, is provided on the first supply passage R1.

In parallel to the first pump P1 and the first supply passage R1, a second pump P2 which pumps oil from the oil reservoir 20a or from the separately provided oil reservoir 120, and a second supply passage R2 which includes a one-way valve 22 are provided. A brushless sensorless motor which includes the mechanism D for preventing losing synchronism is applied to the second pump P2. The second supply passage R2 merges together with the first supply passage R1 between the first pump P1 and the relief valve 21.

The second pump P2 is, for example, applied for supplying working oil to the CVT at a stage where the engine stops. In order to achieve the foregoing, it is required that the working oil is supplied immediately after the engine stops. However, an oil pressure in the first supply passage R1 maintains high pressure immediately after the engine stops. When trying to operate the second pump P2 in the foregoing state, the pressure in the discharge port 3 is high enough to be resistance against a start of the second pump P2, and drawbacks such as that the rotor 4 does not start to rotate or lose synchronism, or the like is caused. With the construction according to the embodiment of the present invention, by establishing the communication between the discharge port 3 and the intake port 2 or by establishing the communication between the discharge port 3 and the outside of the second pump P2 under a state where the hydraulic pressure in the discharge port 3 is high, the pressure in the discharge port 3 is declined, and thus sound rotation state of the rotor 4 is maintained.

The fluid supply apparatus includes the relief valve 21 which is provided at the first supply passage R1 as a means for resolving an increase of the oil pressure, and the mechanism D for preventing losing synchronism provided at the second supply passage R2. In this case, functions of the relief valve 21 and the mechanism D for preventing losing synchronism are totally different from each other. The relief valve 21 is capable of preventing supply of oil having an excessive pressure to the CVT which is the destination of the supplied oil. Because the first pump P1 is a mechanical pump, the first pump P1 can supply oil having high pressure easily. However, oil having high pressure is not necessarily required depending on a drive mechanism at a destination of the oil. Accordingly, the relief valve 21 is provided on the first supply passage R1 in order to supply oil having an optimum pressure. By means of the one-way valve 22 provided at the second supply passage R2, oil having the high pressure does not reverse to the second pump P2 side during the operation of the first pump P1.

On the other hand, the mechanism D for preventing losing synchronism provided at the second pump P2 maintains a rotation of the rotor 4 by restraining an excessive load by the hydraulic pressure of oil. The second pump P2 assists the first pump P1 to supply oil when the first pump P1 is stopped or when oil to be supplied is at low temperature. The second pump P2 also assists the first pump P1 to supply oil to the CVT in place of the first pump P1. However, depending on a timing to start operating the second pump P2, because oil pressure in the first supply passage R1 is excessive, the second pump P2 cannot be operated and drawbacks such as losing synchronism of the motor is likely caused even during the operation of the second pump P2. Thus, it is significant to count an appropriate timing for starting an operation of the second pump P2. Counting of the appropriate timing for starting the operation of the second pump P2 was not easy, for example, it has been necessary to provide an additional sensor. According to the fluid supply apparatus constructed using the brushless sensorless motor including the foregoing mechanism D for preventing losing synchronism, drawbacks such as the losing synchronism can be solved, can be used in various environments, and is stable in operation with a simple construction.

According to the embodiment of the present invention, using the brushless sensorless motor, the electric pump which is durable in the high temperature environment and high humidity environment can be obtained. Because the rotor and the induction circuit are not in contact each other with the brushless sensorless motor, the brushless sensorless motor is likely to lose synchronism in accordance with an increase of fluid pressure at the discharge port. However, with the construction in which a part of the fluid in the discharge port is either returned to the intake port or discharged to the outside of the pump body, hydraulic pressure in the discharge port can be set within a predetermined initial range. In a consequence, the electric pump, which effectively prevents losing synchronism of the brushless sensorless motor and excels in stable supply of the oil, can be obtained.

According to the embodiment of the present invention, an increase of the fluid pressure in the discharge port can be restrained by the mechanism for preventing losing synchronism including the cylinder, the piston, and the biasing member, without providing a separate pressure sensor. Because the mechanism for preventing losing synchronism determines a position of the piston by balancing the biasing force of the biasing member and the hydraulic pressure in the discharge port, which is a simple structure, highly reliable device can be obtained. Further, because the setting of the hydraulic pressure to return the fluid in the discharge port can be easily changed, for example, by changing the biasing member to another having different modulus of elasticity, widely applicable electric pump can be obtained.

According to the embodiment of the present invention, by the construction which can supply the fluid by means of the second pump in addition to the fluid supply by the first pump, the fluid supply apparatus which includes an auxiliary function to supply fluid can be obtained, which is usable in the severe environment. In this case, even when there is a large difference between the fluid supply pressure by the first pump, which is a main fluid supply apparatus, and the fluid supply pressure by the second pump, which is an auxiliary fluid supply apparatus, by using the second pump which solves the problem of the brushless sensorless motor, such as being likely to lose synchronism, the rotor can securely start to rotate when the second pump is in operation. Further, because the rotor which once start to rotate securely maintains the rotation, the fluid supply apparatus which excels in operational stability can be obtained.
It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. An electric pump comprising:
a pump body (1);
an intake port (2) formed in the pump body;
a discharge port (3) formed in the pump body for discharging fluid pumped from the intake port;
a rotor (4) housed in the pump body; and
a brushless sensorless motor (5) which rotates the rotor; **characterized by**
a mechanism (D, D') for preventing losing synchronism of the brushless sensorless motor by controlling hydraulic pressure in the discharge port not to exceed a predetermined pressure.

2. The electric pump according to Claim 1, wherein the mechanism for preventing losing synchronism controls the hydraulic pressure in the discharge port by returning a part of fluid discharged from the discharge port to the intake port.

3. The electric pump according to Claim 1 or 2, wherein the mechanism for preventing losing synchronism controls the hydraulic pressure in the discharge port by discharging the fluid discharged from the discharge port to outside of the pump body.

4. An electric pump according to Claim 2 or 3, wherein the mechanism for preventing losing synchronism includes:
a cylinder (15) having an opening portion (13) at discharge side which is in communication with the discharge port and an opening portion (14) at intake side which is in communication with the intake port; and
a piston (16) configured to be biased towards the opening portion at the discharge side by means of a biasing member (18); wherein
the opening portion at the discharge side and the opening portion at the intake side are configured to establish a communication when the piston is displaced exceeding a predetermined position against the biasing force of the biasing member by means of hydraulic pressure from the discharge port.

5. The electric pump according to Claim 4, wherein the piston (16) includes a communication passage (17) including plural holes which establishes the communication between the opening portion (14) at the intake side and the opening portion (13) at the discharge side when the piston is displaced exceeding the predetermined position against the biasing force of the biasing member.

6. A fluid supply apparatus comprising:
a first pump (P1) which pumps fluid from a fluid reservoir (20, 120);
a first supply passage (R1) for conveying pumped fluid to a destination of the fluid to be supplied;
a relief valve (21) provided on the first supply passage, the relief valve preventing an increase of fluid pressure in the first supply passage to be equal to or greater than a predetermined pressure;
an intake port (2) which pumps fluid from either the fluid reservoir (20) or a separately provided fluid reservoir (120);
an electric driven second pump (P2) having a discharge port (3) for discharging pumped fluid; a second supply passage (R2) merged with the first supply passage between the first pump and the relief valve; and
a rotor (4) provided on the second pump and electrically driven by a brushless sensorless motor (5); **characterized by**
a mechanism (D, D') for preventing losing synchronism of the brushless sensorless motor by controlling hydraulic pressure in the discharge port not to exceed a predetermined pressure value lower than operational pressure of the relief valve.

7. The fluid supply apparatus according to Claim 6, wherein the mechanism for preventing losing synchronism controls hydraulic pressure by returning the fluid discharged from the discharge port to the intake port.

8. The fluid supply apparatus according to Claim 6 or 7, wherein the mechanism for preventing losing synchronism controls hydraulic pressure by discharging the fluid discharged from the discharge port to outside of the second pump.
